# EUROPÄISCHE PATENTSCHRIFT

(11) **EP 0 535 406 B1**
(45) Veröffentlichungstag und Bekanntmachung des Hinweises auf die Patenterteilung: **04.05.1994**
(21) Anmeldenummer: 92115307.8
(22) Anmeldetag: 08.09.1992
(51) Int. Cl.: B60K 11/08, B60K 13/06, B60R 19/48

(54) **Kraftfahrzeug-Vorderbau**
Front structure for automotive vehicles
Structure avant pour véhicules automobiles

(30) Priorität: 30.09.1991 DE 4132570
(43) Veröffentlichungstag der Anmeldung: 07.04.1993
(73) Patentinhaber: Bayerische Motoren Werke Aktiengesellschaft, 80788 München (DE)
(72) Erfinder: Hütz, Holger, W-8000 München 19 (DE)

(56) Entgegenhaltungen:
- EP-A- 0 134 765
- DE-C- 3 825 071
- US-A- 2 358 486
- US-A- 4 653 788

## Beschreibung

Die Erfindung betrifft einen Kraftfahrzeug-Vorderbau mit einem Stoßfängerteil, das gemeinsam mit einem lose hierzu angeordneten Formteil einen Luftführungskanal bildet. Ein derartiges Kraftfahrzeug ist in der EP 0 134 765 B1 gezeigt.

Luftführungskanäle befinden sich im Bereich von Kraftfahrzeug-Vorderbauten zu vielfältigen Zwecken. So wird beispielsweise der Kühlluftstrom für einen Kühler einer Kraftfahrzeug-Antriebseinheit gezielt von der Außenhaut des Kraftfahrzeuges zum Kühler hin geleitet. Auch kann der einen Wärmetauscher einer Fahrzeug-Klimatisierungsanlage beaufschlagende Luftstrom gezielt geführt werden, um einen optimierten Wärmetauscher-Wirkungsgrad zu erzielen. Weiter werden gezielt geführte Luftströme benötigt, um Bauteile bzw. Hilfsaggregate des Kraftfahrzeuges, so beispielsweise einen Generator, gezielt zu kühlen oder um eine das Kraftfahrzeug antreibende Brennkraftmaschine mit Verbrennungsluft zu versorgen. Insbesondere für den letztgenannten Anwendungsfall ist aus akustischen Gründen ein nach außen hin im wesentlichen abgeschlossener Luftführungskanal erwünscht. Wird jedoch der Luftführungskanal teilweise durch ein Stoßfängerteil des Kraftfahrzeuges gebildet, so sind geringe Verschiebebewegungen dieses Stoßfängerteiles zu berücksichtigen, ohne daß diese Verschiebebewegungen bleibende Verformungen am Luftführungskanal zurücklassen würden. Beispielsweise sind Kraftfahrzeuge auf dem Markt, bei denen die vorderen Stoßfänger über Tragarme an sog. Prallboxen aufgehängt sind, die einen Aufprall des Kraftfahrzeuges mit einer Maximalgeschwindigkeit von 4 km/h reversibel aufzunehmen vermögen.

Zwar zeigt die oben genannte Schrift einen Kraftfahrzeug-Vorderbau mit einem Luftführungskanal, der bei geringfügigen Bewegungen des Stoßfängerteiles keinen Schaden nimmt, jedoch ist dieser bekannte Luftführungskanal nach außen hin nicht abgeschlossen. Hier können sich somit undefinierte und daher unerwünschte Strömungsverhältnisse einstellen. Aufgabe der Erfindung ist es daher, einen Kraftfahrzeug-Vorderbau aufzuzeigen, bei dem ein Luftführungskanal durch ein Stoßfängerteil sowie ein Formteil gebildet wird, wobei diese beiden Teile zumindest geringfügig gegeneinander bewegbar und somit lose zueinander angeordnet sind, und wobei darüber hinaus ein nach außen hin abgeschlossener Luftführungskanal vorliegt. Zur Lösung dieser Aufgabe ist vorgesehen, daß das Stoßfängerteil und das Formteil zumindest bereichsweise einen im wesentlichen U-förmigen Querschnitt besitzen und mit ihren Schenkeln einander zugewandt angeordnet sind, um einen Kanal mit geschlossenem Querschnitt zu bilden. Vorteilhafte Aus- und Weiterbildungen der Erfindung beschreiben die Unteransprüche.

Ein geschlossener Kanal wird erfindungsgemäß durch zumindest zwei Kanalhälften gebildet, die sich zu einem im wesentlichen geschlossenen Profil ergänzen. Im Querschnitt sind somit das Stoßfängerteil und das Formteil, welche selbstverständlich für sich jeweils auch mehrteilig ausgebildet sein können, im wesentlichen U-förmig. Liegen diese beiden Teile mit ihren Schenkeln nun aneinander an, so entsteht ein geschlossener Kanal, der, so sich die Schenkel an ihren Stirnseiten nicht berühren, geringfügige Bewegungen der einzelnen Kanalteile zueinander und insbesondere eine geringfügige Bewegung des Stoßfängerteiles in Richtung auf das Formteil zu ermöglicht. Zur Verbesserung der Abdichtung kann zwischen den sich überlappenden und im wesentlichen parallel zueinander verlaufenden Schenkeln des Formteiles sowie des Stoßfängerteiles darüber hinaus ein Dichtelement angeordnet sein. Diese erfindungsgemäße Ausbildung eignet sich auch für die oben beschriebene Kraftfahrzeug-Bauform, bei der das Stoßfängerteil längsverschiebbar ausgebildete Tragarme ggf. mit einer Prallbox aufweist, da diese Tragarme dann das Formteil durchdringen können. Selbstverständlich sind Luftübertrittsöffnungen erforderlich, um einen Luftstrom in den nach außen geschlossenen Kanal gelangen zu lassen bzw. um den Luftstrom wieder aus dem Kanal herauszuführen. Vorteilhafterweise kann insbesondere das Formteil zugleich einen weiteren Kühlluftkanal, so beispielsweise für den Kühler einer Fahrzeug-Antriebseinheit, bilden und ggf. mit Aufnahmevorrichtungen für diesen Kühler versehen sein.

Im folgenden wird die Erfindung anhand eines bevorzugten Ausführungsbeispieles näher erläutert. In zwei unterschiedlich verlaufenden Längsschnitten (Fig. 1, Fig. 2) ist ein erfindungsgemäßer Kraftfahrzeug-Vorderbau, sowie in Fig. 3 perspektivisch ein entsprechendes Formteil dargestellt.

Ein Kraftfahrzeug besitzt an seinem Frontende ein Stoßfängerteil 1, das über Tragarme 2 derart befestigt ist, daß eine geringfügige Verschiebebewegung gegen Fahrzeug-Fahrtrichtung, d. h. in Pfeilrichtung 3 möglich ist. Diese geringfügige Verschiebebewegung ist dabei reversibel, d. h. mit Abschluß der Krafteinwirkung von außen wird das Stoßfängerteil 1 in seine Sollposition zurückbewegt.

Gemeinsam mit einem Formteil 4 bildet das Stoßfängerteil 1 einen zumindest bereichsweise quer zur Fahrzeug-Fahrtrichtung, d. h. senkrecht zur Zeichenebene verlaufenden Luftführungskanal 5. Dieser Luftführungskanal 5 soll zum einen abschnittsweise gegenüber der Umgebung weitestgehend abgeschlossen und daher relativ dicht sein, darüber hinaus soll dieser Luftführungskanal bei geringfügigen Verschiebebewegungen des Stoßfängerteiles 1 unbeschädigt bleiben. Daher besitzen sowohl das Stoßfängerteil 1 als auch das Formteil 4 zumindest bereichsweise einen im wesentlichen U-förmigen Querschnitt und sind mit ihren Schenkeln 1a, 1b bzw. 4a, 4b einander zugewandt angeordnet. Dabei verlaufen die Schenkel 1a, 4a bzw. 1b, 4b bereichsweise im wesentlichen parallel zueinander und überlappen sich ggf. Da die Stirnseiten der einzelnen Schenkel nicht aufeinanderstoßen, kann das Stoßfängerteil 1 somit geringfügig in Pfeilrichtung 3 verschoben werden, ohne daß hierbei das Formteil 4 beschädigt wird.

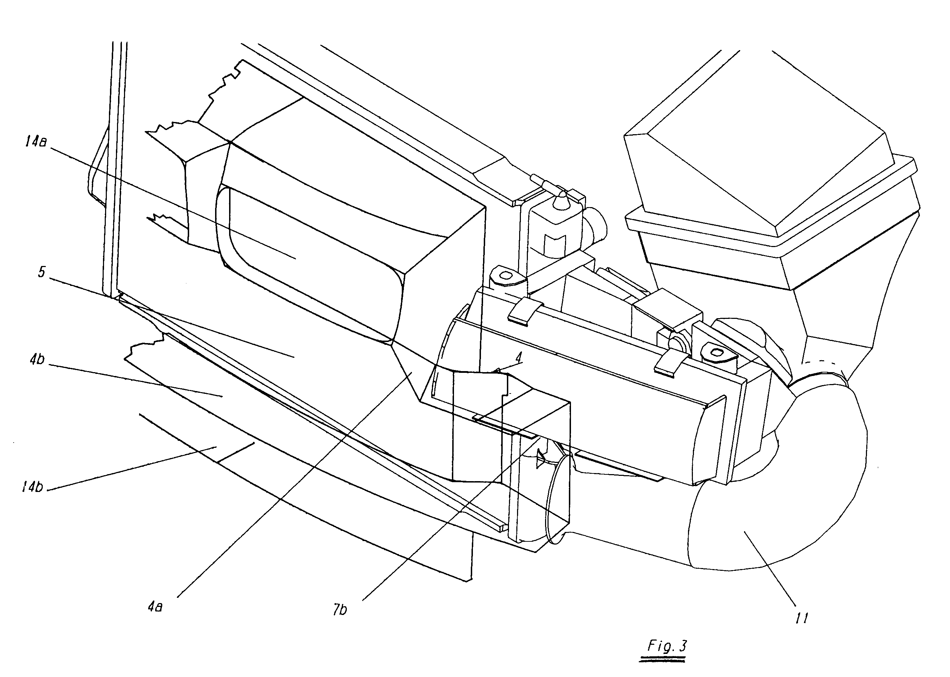

Zumindest zwischen den Schenkeln 1b, 4b ist ein Dichtelement 6 vorgesehen. Dort wird somit erwünschtermaßen ein Luftübertritt in bzw. aus dem Luftführungskanal 5 verhindert. Jedoch sind im Formteil 4 mehrere Luftdurchtrittsöffnungen 7a, 7b vorgesehen, über die ein Luftstrom in den Luftführungskanal 5 gelangen und aus diesem auch wieder austreten kann. Die den Eintritt eines Luftstromes erlaubenden Luftdurchtrittsöffnungen 7a sind im oberen Schenkel 4a des Formteiles 4 vorgesehen und liegen in einem Bereich, in dem ein durch Pfeile dargestellter Luftstrom über eine öffnung 8 in der Außenhaut 9 des Kraftfahrzeuges in den Innenraum des Kraftfahrzeug-Vorderbaus gelangen kann. Eine Luftaustrittsöffnung 7b hingegen liegt im Seitenbereich des Kraftfahrzeuges und mündet in einen Ansaugkanal 11 einer das Kraftfahrzeug antreibenden Brennkraftmaschine (vgl. Fig. 3) sowie in einen nicht gezeigten Kühlluftkanal für einzelne Fahrzeug-Bestandteile, so beispielsweise einen Generator oder eine Fahrzeug-Bremsscheibe.

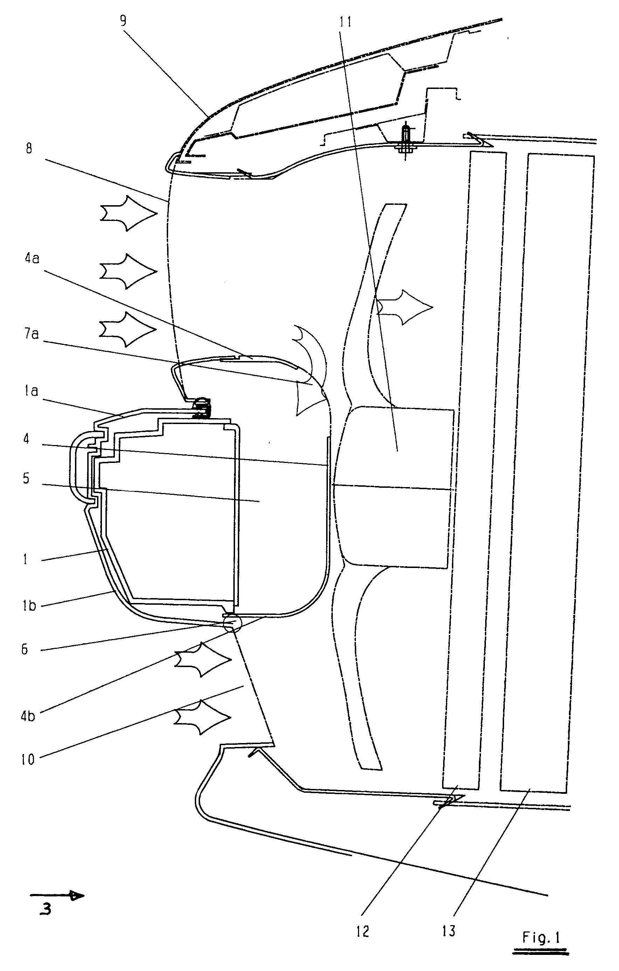

Fig. 1 zeigt neben der Öffnung 8 eine weitere Lufteintrittsöffnung 10 in der Außenhaut 9. Sowohl über die Lufteintrittsöffnung 10 als auch über die Öffnung 8 gelangt ein Luftstrom, der ggf. von einem Axialgebläse 11 beschleunigt wird, zu einem Wärmetauscher 12 einer Fahrzeug-Klimatisierungsvorrichtung (Kondensator einer Klimaanlage) sowie zu einem stromab des Wärmetauschers 12 angeordneten Kühler 13 einer Fahrzeug-Antriebseinheit. Detailliert erkennt man die für diesen Luftstrom aus dem Formteil 4 herausgearbeiteten Kühlluftkanäle 14a, 14b in Fig. 3.

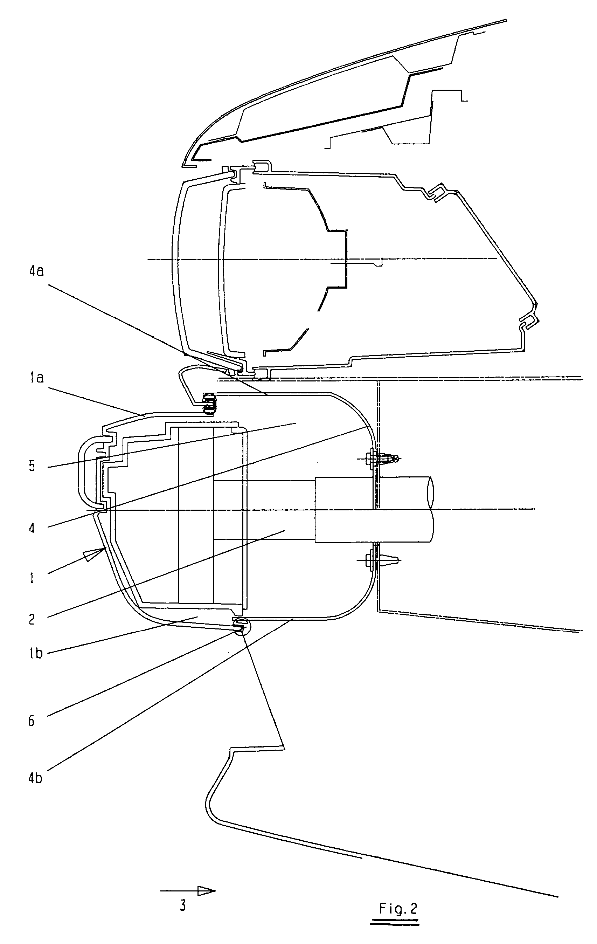

Fig. 2 zeigt, daß der bzw. die Tragarme 2 des Stoßfängerteiles 1 die Rückwand des Formteiles 4 durchdringen. Somit ist es nicht erforderlich, den Luftführungskanal 5 aufwendig in verwinkelter Weise um den Tragarm 2 herumzuführen. Auch kann der Tragarm 2 für sich den Anforderungen entsprechend in optimaler Weise gestaltet werden. Generell zeichnet sich ein erfindungsgemäßer Kraftfahrzeug-Vorderbau durch gezielte Luftführung aus, wobei der zur Verfügung stehende Bauraum in optimaler Weise ausgenutzt wird. Vorteilhafterweise ist der im Luftführungskanal 5 geführte Luftstrom kaum verschmutzt bzw. bereits von vorhandenen Schmutzpartikeln befreit, wenn der Luftstrom an seinen Zielpunkten, d. h. insbesondere im Ansaugsystem der das Fahrzeug antreibenden Brennkraftmaschine angekommen ist. Vorteilhafterweise werden durch das einzige Formteil 4 darüber hinaus verschiedene Luftströme geführt, die sich dabei nicht vermischen können. Die definierte Luftführung erlaubt dabei eine verbesserte akustische Abstimmung, wobei die jeweiligen Luftführungskanäle 5 bzw. 14a, 14b den jeweiligen Strömungsverhältnissen in optimaler Weise angepaßt werden können. Dabei können konstruktive Details durchaus abweichend vom gezeigten Ausführungsbeispiel gestaltet sein, ohne den Inhalt der Patentansprüche zu verlassen.

## Patentansprüche

1. Kraftfahrzeug-Vorderbau mit einem Stoßfängerteil (1), das gemeinsam mit einem lose hierzu angeordneten Formteil (4) einen Luftführungskanal (5) bildet, dadurch gekennzeichnet, daß das Stoßfängerteil (1) und das Formteil (4) zumindest bereichsweise einen im wesentlichen U-förmigen Querschnitt besitzen und mit ihren Schenkeln (1a, 1b, 4a, 4b) einander zugewandt angeordnet sind, um einen Kanal mit geschlossenem Querschnitt zu bilden.

2. Kraftfahrzeug-Vorderbau nach Anspruch 1,
dadurch gekennzeichnet, daß zwischen einem Schenkel (1b) des Stoßfängerteiles (1) sowie einem im wesentlichen überlappend parallel dazu verlaufenden Schenkel (4b) des Formteiles (4) ein Dichtelement (6) vorgesehen ist.

3. Kraftfahrzeug-Vorderbau nach Anspruch 1 oder 2,
dadurch gekennzeichnet, daß längsverschiebbar ausgebildete Tragarme (2) des Stoßfängerteiles (1) das Formteil (4) durchdringen.

4. Kraftfahrzeug-Vorderbau nach einem der Ansprüche 1 bis 3,
dadurch gekennzeichnet, daß zumindest ein Schenkel (4a) des Formteiles (4) und/oder des Stoßfängerteiles (1) eine Luftdurchtrittsöffnung (7a, 7b) aufweist.

5. Kraftfahrzeug-Vorderbau nach einem der Ansprüche 1 bis 4,
dadurch gekennzeichnet, daß sich an den Luftführungskanal (5) ein Ansaugkanal (11) einer das Kraftfahrzeug antreibenden Brennkraftmaschine oder ein Kühlluftkanal für einzelne Fahrzeug-Bestandteile anschließt.

6. Kraftfahrzeug-Vorderbau nach einem der Ansprüche 1 bis 5,
dadurch gekennzeichnet, daß das Formteil (4) zugleich einen weiteren Kühlluftkanal (14a, 14b) für einen Kühler (13) einer Fahrzeug-Antriebseinheit und/oder für einen Wärmetauscher (12) einer Fahrzeug-Klimatisierungsvorrichtung bildet.

## Claims

1. A motor-vehicle front structure comprising a bumper part (1) which, in co-operation with a moulded part (4) loosely disposed thereon, forms an air-conveying duct (5), characterised in that the bumper part (1) and the moulded part (4), at least partially or in places, have a substantially U-shaped cross-section, the arms of the U (1a, 1b, 4a, 4b) facing one another to form a duct having a closed cross-section.

2. A motor-vehicle front structure according to claim 1, characterised in that a sealing element (6) is provided between an arm (1b) of the bumper part (1) and a substantially overlapping and parallel arm (4b) of the moulded part (4).

3. A motor-vehicle front structure according to claim 1 or 2, characterised in that longitudinally-extendible brackets (2) for the bumper part (1) extend through the moulded part (4).

4. A motor-vehicle front structure according to any one of claims 1 to 3, characterised in that at least one arm (4a) of the moulded part (4) and/or of the bumper part (1) has an air opening (7a, 7b).

5. A motor-vehicle front structure according to any one of claims 1 to 4, characterised in that the air-conveying duct (5) communicates with an induction or inlet duct (11) of an internal combustion engine driving the vehicle, or with a cooling-air duct for individual components of the vehicle.

6. A motor-vehicle front structure according to any one of claims 1 to 5, characterised in that the moulded part (4) has an additional cooling-air duct (14a, 14b) for a radiator (13) of a vehicle drive unit and/or for a heat exchanger (12) of a vehicle air-conditioning device.

## Revendications

1. Structure avant de véhicule avec une partie de pare-chocs (1) qui forme en commun avec une pièce usinée (4) disposée pour et amovible un canal de circulation d'air (5), caractérisée en ce que la partie de pare-chocs (1) et la pièce usinée (4) possèdent au moins par zone une section transversale essentiellement en forme de U et sont disposées avec leurs branches (1a, 1b, 4a, 4b) tournées l'une vers l'autre, pour former un canal de section transversale fermée.

2. structure avant de véhicule suivant la revendication 1, caractérisée en ce qu'il est prévu un élément d'étanchéité (6) entre une branche (1b) de la partie de pare-chocs (1)et une branche (4b) de la pièce usinée (4) se développant essentiellement parallèlement à la première en la recouvrant.

3. Structure avant de véhicule suivant la revendication 1 ou 2, caractérisée en ce que des consoles (2)réalisées avec coulissement longitudinal possible de la pièce de pare-chocs (1) pénétrent dans la pièce usinée (4).

4. Structure avant de véhicule suivant une des revendications 1 à 3, caractérisée en ce qu'au moins une branche (4a) de la pièce usinée (4) et/ou de la partie de pare-chocs (1) comporte une ouverture de passage d'air (7a, 7b).

5. Structure avant de véhicule suivant une des revendications 1 à 4, caractérisée en ce que sur e canal de circulation d'air (5) se raccorde un canal d'aspiration (11) d'un moteur à combustion interne entraînant le véhicule ou un canal d'air de refroidissement pour des composants sééparés du véhicule.

6. Structure avant de véhicule selon une des revendications 1 à 5, caractérisée en ce que la pièce usinée (4) forme en même temps un autre canal d'air de refroidissement (14a, 14b) pour un refroidisseur (13) d'une unité d'entraînement du véhicule et/ou pour un échangeur thermique (12) d'un dispositif de climatisation du véhicule.
